# EUROPÄISCHE PATENTANMELDUNG

(11) **EP 1 039 246 A2**
(43) Veröffentlichungstag der Anmeldung: **27.09.2000**
(21) Anmeldenummer: 00105535.9
(22) Anmeldetag: 16.03.2000
(51) Int. Cl.: F24H 1/43, F24H 9/14

(54) **Kompaktheizkessel**

(30) Priorität: 19.03.1999 DE 19912572
(71) Anmelder: VIESSMANN WERKE GmbH & CO., 35107 Allendorf/Eder (DE)
(72) Erfinder: Göbel, Peter, 35066 Frankenberg (DE)
(74) Vertreter: Wolf, Günter, Dipl.-Ing.

(57) **Zusammenfassung**

Die erfindung betrifft einen Kompaktheizkessel, insbesondere zur Verwendung als Brennwertheizkessel, bestehend aus einer in einem das wärmeabgebende Medium führenden, mit Brenner bestückbaren Gehäuse (1) angeordneten, den Wärmeträger führenden Rohrwendel (2), deren die Wendelgänge (3) bildendes Rohr (4) einen Spalt (5) für das radial von innen aus der Rohrwendel (2) nach außen in das mit Abzugsstutzen (6) versehene Gehäuse (1) strömenden Heizgase begrenzt.
Nach der Erfindung ist ein solcher Kompaktheizkessel derart ausgebildet, daß die Rohrwendel (2) hydraulisch zwischen zwei die Anschlußhydraulik für den Wärmeträger enthaltenden und die Seitenwände (1',1'') des Gehäuses (1) bildenden Platinen (7,8) eingebunden ist und daß der die Rohrwendel (2) umgebende Heizgasabströmraum (9) durch eine auf die Umfangsränder (10) der Platinen (7,8) abgedichtet aufgeschobene, den Abzugsstutzen (6) und einen Kondensatablaufstutzen (11) aufweisende Umfangswand (12) begrenzt ist.

## Beschreibung

Die Erfindung betrifft einen Kompaktheizkessel, insbesondere zur Verwendung als Brennwertheizkessel, bestehend aus einer in einem das wärmeabgebende Medium führenden Gehäuse angeordneten, den Wärmeträger führenden Rohrwendel, deren die Wendelgänge bildendes Rohr einen Spalt für das radial von innen aus der Rohrwendel nach außen in das mit Abzugsstutzen versehene Gehäuse strömenden Heizgase begrenzt.

Derartige Heizkessel sind bspw. nach der FR-A-2700608 bekannt, in denen sich Rohrwendeln der eingangs genannten Art als hochwirksame Bauelemente insbesondere auch für Brennwertheizkessel erwiesen haben und demgemäß mit sehr kompakten Abmessungen gebaut werden können. In dieser FR-A-2700608 sind zwar mehrere unterschiedliche Durchströmungs-und Verschaltungsmöglichkeiten solcher rohrwendelartiger, in einem Umschließungsgehäuse angeordneter Wärmetauscher in Betracht gezogen, diese beschränken sich aber auf rein schematische Darstellungen, die jedoch erkennen lassen, daß Heizkessel mit solchen Wärmetauschern mit ihren notwenigen Umschließungsgehäusen nur schwerlich einer rationellen Serienfertigung zugänglich sind, die, soll sie tatsächlich rationell sein, zum einen in der Regel einfache Vorfertigung von Einzelkomponenten zum anderen anschließend eine ebenso einfache Zusammenfügung bzw. Montage zulassen muß und die auch einer Reinigung zugänglich sein müssen.

Der Erfindung liegt demgemäß die Aufgabe zugrunde, einen Heizkessel der eingangs genannten Art dahingehend zu verbessern und auszugestalten, daß unter Direkteinbezug wesentlicher Gehäusebauteile in die Kesselhydraulik und bei kompakter Bauweise eine solche rationelle Serienfertigung gewährleistet ist, verbunden mit der Maßgabe, dabei auf einfache Weise für eine Reinigungsmöglichkeit der Rohrwendel zu sorgen.

Diese Aufgabe ist mit einem Kompaktheizkessel der eingangsgenannten Art nach der Erfindung durch die im Kennzeichen des Patentanspruches 1 angeführten Merkmale gelöst. Vorteilhafte Weiterbildungen ergeben sich nach den abhängigen Patentansprüchen.

Mit der erfindungsgemäßen Lösung sind die gestellten Forderungen erfüllt:
Das Ganze besteht im einfachsten Fall aus lediglich vier separat vorzufertigenden Einzelkomponenten, nämlich aus den beiden die Seitenwände des Gehäuses bildenden Platinen, der Rohrwendel selbst und aus der einfach auf zuschiebenden Umfangswand, die demgemäß bei notwendig werdender Reinigung einfach abzuziehen ist, wodurch die Rohrwendel problemlos von außen zugänglich wird.

Bei der Separatfertigung der Komponenten werden die betreffenden, wegen ihrer Hohlraumausbildung zweilagigen Platinen nach ihrer Formprägung vor ihrer Verbindung mit den Wendelteilen zunächst an ihren Außenlagen mit den entsprechenden Anschlüssen bestückt, und die Innenlagen werden mit den entsprechend zugeschnittenen Enden der Rohrwendel verschweißt.
Die erfindungsgemäße "Platinenbauweise" ermöglichst auch die bevorzugte Aufgliederung der Rohrwendel in Wendelteile gemäß der abhängigen Ansprüche 6,7 und deren Paralellelschaltung, da dadurch relativ querschnittskleine Flachrohre für die Rohrwendeln benutzt werden können, die somit wenig Raum beanspruchen und der einzuhaltenden Kornpaktbauweise genügen.
Zur Endmontage gehört dann schließlich noch die hier an sich nicht unmittelbar interessierende, äußere Wärmeisolation und die Anbringung eines geeigneten Umschließungsgehäuses, die sich aber ebenfalls sehr einfach gestalten, da, wie bei "normalen" Heizkesseln, dank der in die Platinen einbezogenen Hydraulik lediglich die Anschlüsse für Vor- und Rücklauf zu berücksichtigen sind.
Bezüglich der Umfangswand ist übrigens unter "abgedichtet aufgeschoben" deren lösbare Zuordnung zu den Platinen zu verstehen, d.h., es liegt keine feste Verbindung bzw. Verschweißung mit den Platinenrändern vor, wobei die Platinen nicht nur Gehäusebauteile bilden, sondern diese übernehmen auch die hydrauliche Funktion hinsichtlich der Strömungsführung des Wärmeträgers zu und aus der Rohrwendel bzw. zu und aus den Wendelteilen. Genauso wie die Umfangswand einfach auf die Platinen aufzuschieben ist, kann diese auch entsprechend einfach abgezogen werden, wodurch die Rohrwendel auch von außen zugänglich wird.

Der erfindungsgemäße Kompaktheizkessel wird einschließlich seiner vorteilhaften Ausführungs- und Weiterbildungsformen nachfolgend an Hand der zeichnerischen Darstellung von Ausführungsbeispielen näher erläutert.

Es zeigt
- Fig.1: schematisch einen Längsschnitt durch den Heizkessel in der einfachsten Ausführungsform;
- Fig.2: perspektivisch den Heizkessel ohne seine Umfangswand in einer besonderen Ausführungsform;
- Fig.3: schematisch und im Schnitt den Heizkessel gemäß Fig.2;
- Fig.4: schematisch einen Längsschnitt durch den Heizkessel in einer weiteren Ausführungsform;
- Fig.5: den Heizkessel gemäß Fig.4 in Vorderansicht, d.h., von der Brennereinsatzseite her gesehen;
- Fig.6: vergrößert einen Teilschnitt durch den Zuordnungsbereich der Umfangswand zu den Platinen und
- Fig.7: einen vergrößerten Schnitt zur Darstellung des Kondensatablaufanschlusses.

Der Kompaktheizkessel besteht nach wie vor aus einer in einem das wärmeabgebende Medium führenden Gehäuse 1 angeordneten, den Wärmeträger führenden Rohrwendel 2, deren vorzugsweise einen Flachquerschnitt aufweisendes, die Wendelgänge 3 bildendes Rohr 4 einen insgesamt schraubenlinienförmig verlaufenden Spalt 5 für das radial von innen aus der Rohrwendel 2, d.h., aus der eigentlichen Brennkammer BK nach außen in das mit Abzugsstutzen 6 versehene Gehäuse 1 strömenden Heizgase begrenzt.

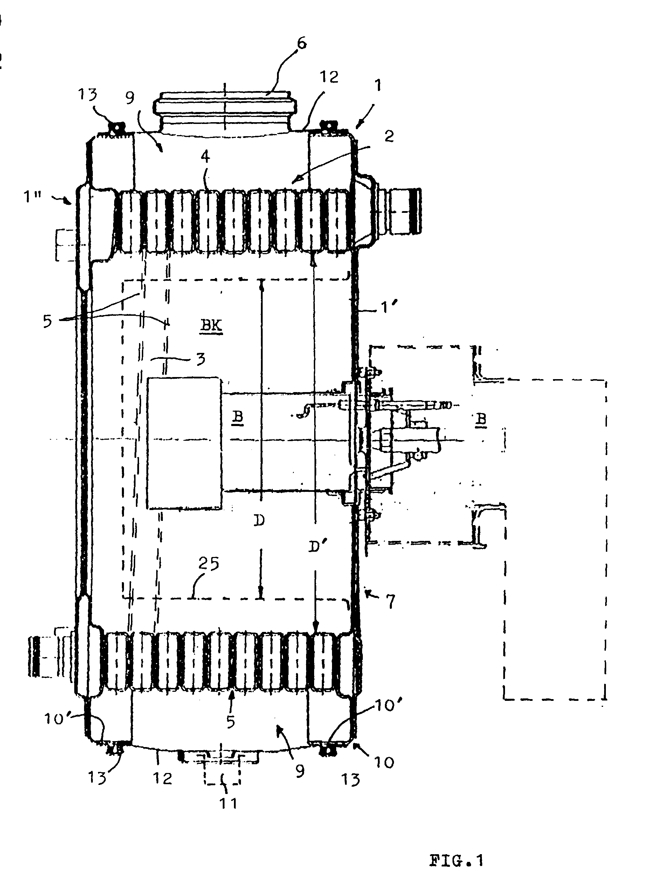

Unter Verweis auf insbesondere die Fig.1, die die einfachste Ausführungsform darstellt, ist nun für einen solchen Kompaktheizkessel wesentlich, daß die Rohrwendel 2 hydraulisch zwischen zwei die Anschlußhydraulik für den Wärmeträger enthaltenden und die Seitenwände 1',1'' des Gehäuses 1 bildenden Platinen 7,8 eingebunden ist und daß der die Rohrwendel 2 umgebende Heizgasabströmraum 9 durch eine auf die Umfangsränder 10 der Platinen 7,8 abgedichtet aufgeschobene, den Abzugsstutzen 6 und einen Kondensatablaufstutzen 11 aufweisende Umfangswand 12 begrenzt ist. Der in Fig.1 mit dargestellte und in einer entsprechenden Öffnung der einen Seitenwand 1' eingesetzte Brenner B ist nur als Beispiel zu verstehen, d.h., es können auch andere Brenner, und zwar insbesondere auch halbkugelförmige Flächenbrenner zur Anwendung kommen.

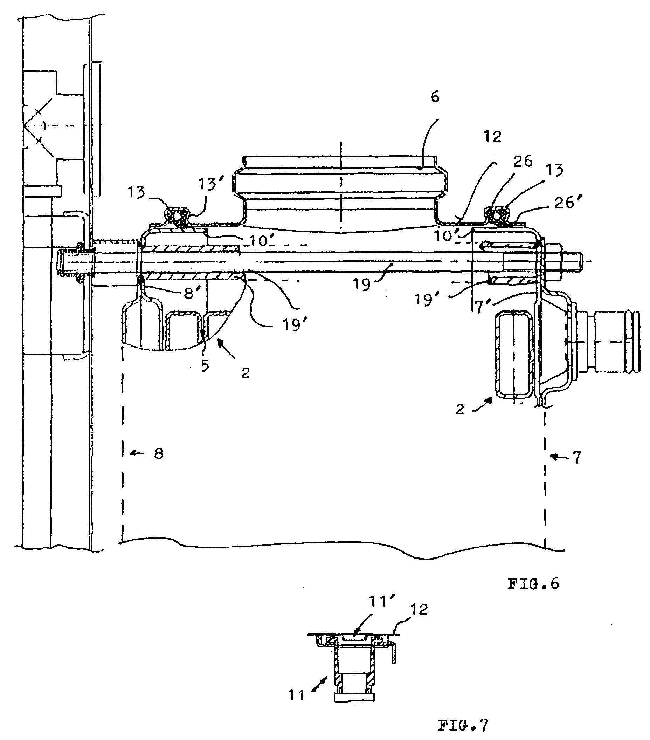

Abgesehen davon, daß der Querschnitt des die Rohrwendel 2 bildenden Rohres auch Kreis- oder Ellipsenform haben kann, werden Rohre mit Querschnitten, wie in den Fig.1,3 und 4 dargestellt, bevorzugt verwendet. Der dargestellte kreisförmige Zuschnitt der Platinen 7,8 ist zwar nicht zwingend, wird aber bevorzugt, da dieser für die Gestaltung und den Aufschub der Umfangswand 12 am günstigsten ist. Für diesen Aufschub und die Abdichtung sind auch die Umfangsränder 10 der Platinen 7,8 in Form gegeneinander gerichtet abgekröpfter Aufschubränder 10' für die Umfangswand 12 ausgebildet(siehe Fig.6).

Ebenfalls unter Verweis auf Fig.6 ist die den Abzugsstutzen 6 mit enthaltende Umfangswand 12 an ihren Rändern mit je einer Umlaufenden Dichtungsaufnahmesicke 13 versehen. Diese Sicken 13 sind vorteilhaft in Form hinterschnittener Nuten 13' ausgebildet, um den darin angeordneten, formangepaßten Dichtungen 26 aus geeignet wärmebeständigem Material einen sicheren Halt zu vermitteln. Diese Dichtungen 26 sind im übrigen mit aus den Nuten herausragenden Lippen 26' versehen, die sich beim Aufschub der Umfangswand 12, wie aus Fig.6 ersichtlich, entgegen der Aufschubrichtung zwischen Umfangswand 12 und den abgekröpften Aufschubrändern 10' orientieren. Bezgl. des ebenfalls zur umfangswand 12 gehörenden Kondensatablaufstutzens 11 wird auf Fig. 7 verwiesen, gemäß der dieser Stutzen 11, wie bespw. dargestellt, einfach abgedichtet über einer entsprechenden Öffnung 11' der Umfangswand 12 leicht auswechselbar angeklemmt wird.

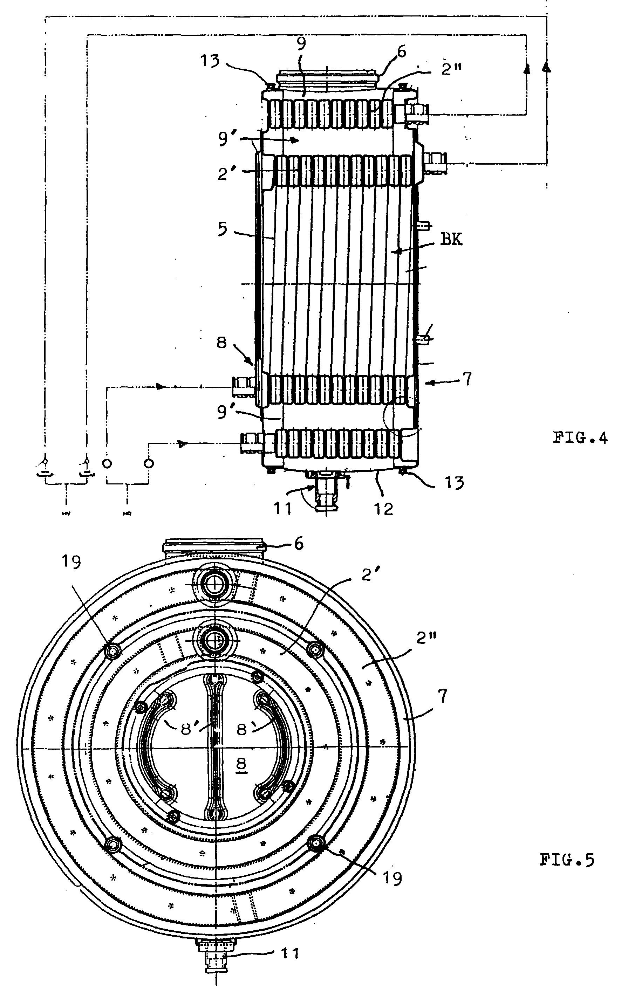

Bei der Darstellung gemäß Fig.6 verbleibend, sind die Platinen 7,8, und zwar ausgehend von ihren in Bezug auf die Rohrwendel 2 überstehenden Rändern 7',8', gegeneinander durch Zuganker 19 verspannt, die, bspw. zu viert auf den Gesamtumfang verteilt (siehe hierzu auch Fig.5), entsprechend bemessene Distanzhalterohre 19' durchgreifen.

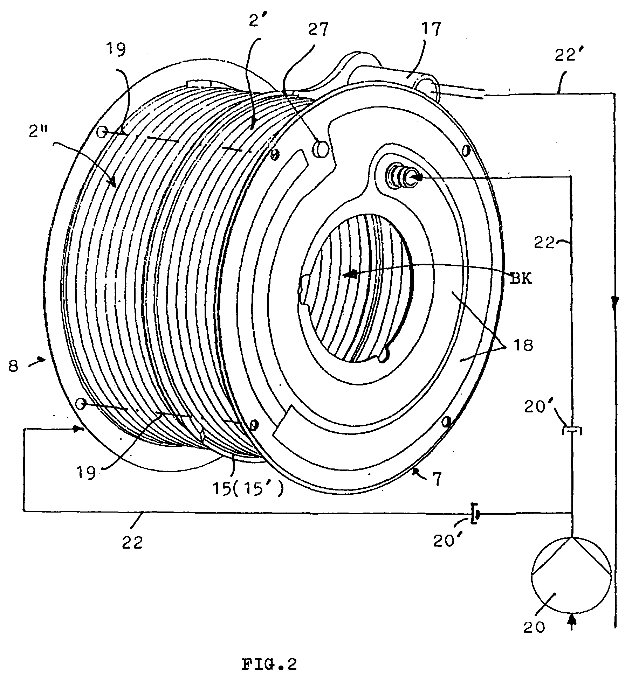

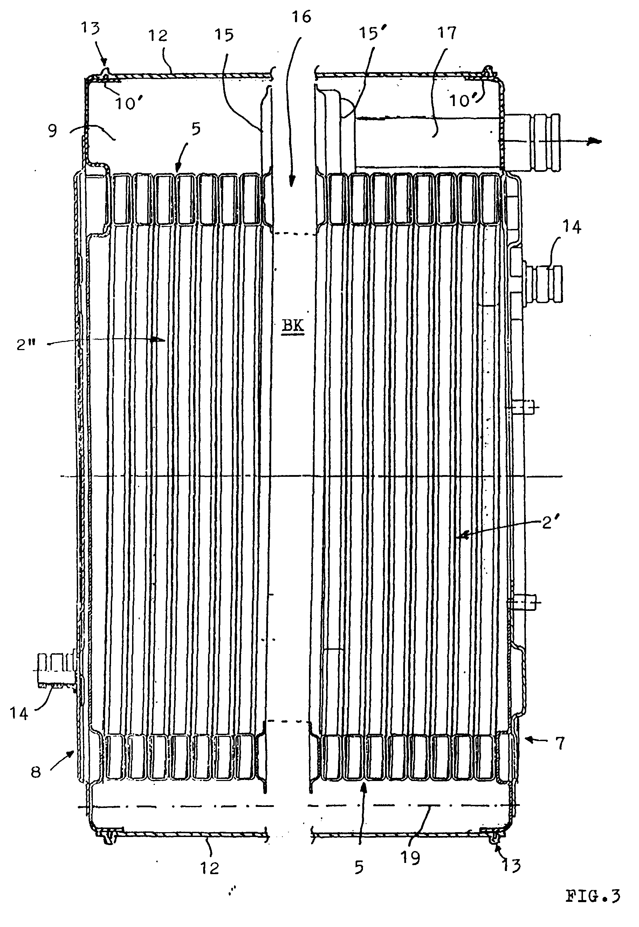

Unter Verweis auf Fig. 2,3 besteht eine vorteilhafte Weiterbildung darin, daß die Rohrwendel 2 aus zwei Wendelteilen 2',2'' gebildet ist, die jeweils in den mit Rücklaufanschlüssen 14 versehenen, äußeren Platinen 7,8 und innen in Platinenschalen 15,15' enden, die, zusammengefügt, einen umlaufenden, im wesentlichen mittigen Vorlaufhohlraum 16 mit Vorlaufanschluß 17 einschließen. In Fig.3 sind die beiden Wendelteile 2',2'' mit ihren Platinenschalen 15,15' zueinander etwas distanziert dargestellt, um so die Separatherstellbarkeit dieser beiden Komponenten zu verdeutlichen. Im übrigen läßt diese Darstellung auch erkennen, daß die die Rückwand der Brennkammer BK bildende Platine 8 als flacher, wasserführender Hohlraum ausgebildet und mit Versteifungsprägungen 8' (siehe Fig.5)versehen ist, die auch gleichzeit der Strömungsführung bzw. - verteilung innerhalb der Platine dienen.

Wie vorerwähnt, läßt die Aufteilung in zwei Wendelteile 2',2'' die Verwendung relativ querschnittskleiner Rohre für die Wendelteile 2',2'' zu, und außerdem wird damit die daraus gebildete Gesamtrohrwendel 2 einer bedarfsangepaßten Regelung des Heizkessels zugänglich.

Insbesondere für diese Äusführungsform ist vorgesehen, daß die beiden Platinen 7,8, ausgehend von ihren Rücklaufanschlüssen 14 (siehe Fig.2), einen sich bis zu zum Rohranschluß des jeweiligen Wendelteiles 2',2'' spiralförmig verlaufenden Flachkanal 18 aufweisen. Wie ebenfalls aus Fig. 2 ersichtlich, sind dabei an den Platinen 7,8 Einsatzöffnungen 27 für Temperatursensoren vorgesehen, die zur Überwachung bzw. Regelung des mini- und maximal zulässigen Heizwasservolumenstromes dienen und auch zur Überwachung der zulässigen Abgastemperatur insbesondere auch bei evtl. Wassermangel.
Bezüglich der Verschaltung der beiden Wendelteile 2',2'' wird ebenfalls auf Fig.2 verwiesen, in der die mit Rückschlagventilen 20' versehenen Rücklaufstränge 22 schematisch mit dargestellt sind, die entweder zu einem mit drehzahlregelbarer Pumpe 20 bestückten Leitungsstrang 21 zusammenlaufen oder bei denen, was nicht besonders dargestellt ist, je eine kleinere Pumpe 20 mit nachgeschaltetem Rückschlagventil 20' in jedem Rücklaufstrang 22 angeordnet sind. Der vom Vorlaufanschluß 17 abgehende Vorlaufstrang ist mit 22' bezeichnet.

Die Ausführungsform nach Fig.4,5 ist zwar ebenfalls nach dem gleichen Prinzip, wie vorbeschrieben, aufgebaut, unterscheidet sich von der gemäß der Fig.1,2 aber dadurch, daß die Rohrwendel 2 aus zwei konzentrisch mit radialem Abstand zueinander angeordneten Wendelteilen 2',2'' gebildet ist, die zwischen den Platinen 7,8 hydraulisch eingebunden sind. Die Vor- und Rücklaufverschaltungen mit den beiden Wendelteilen 2',2'' sind in Fig. 4 ebenfalls mit angedeutet. Um in diesem Falle den Zwischenraum 9' zwischen den beiden Wendelteilen 2',2'' ebenfalls einer Reinigung zugänglich zu machen, genügt es, was nicht besonders dargestellt ist, in einer der beiden Platinen 7,8 eine verschließbare Reinigungsöffnung vorzusehen, durch die dieser Zwischenraum 9' bspw. ausgesaugt werden kann.

Mit der Aufteilung der Rohrwendel in jeweils zwei Wendelteile hat es dabei folgende Bewandnis:
Durch die Ausbildung parallel geschalteter Rohrwendeln mit einem gemeinsamen Vorlaufanschluß wird vorteilhaft insbesondere im Leistungsbereich > 30-60 kW der Einsatz kostengünstiger Großserienpumpen möglich. Außerdem besteht die Möglichkeit, die Rohrwendelteile so einzubinden, daß je nach Leistungsgröße zwei oder nur eine Pumpe für den Rücklauf vorgesehen werden kann.

Die vorerwähnte einfachste Ausführungsform gemäß Fig.1 ist zur Darstellung einer weiteren vorteilhaften Ausführungsform mit herangezogen, die jedoch auch bei den anderen Ausführungsformen nach den Fig.3 und 4 zur Anwendung kommen und problemlos im Rahmen einer Serienfertigung mit in den Heizkessel einbezogen werden kann.

Hierbei ist an der brennerseitigen Gehäusewand 1', d.h., an der dortigen Platine 7 ein zylindrischer oder kegelstumpfförmiger, zur gegenüberliegenden Seitenwand 1'' schwach konvergierender Einsatz 25 angeordnet, dessen Durchmesser D kleiner ist als der Innendurchmesser D' der Rohrwendel 2 und der bspw. und bevorzugt aus einem mehr oder weniger feingelochten Blech oder auch Drahtgewebe besteht und in diesem Falle sogar mit einem Boden, wie gestrichelt angedeutet, versehen sein kann. Ein solcher Einsatz 25 sorgt insbesondere für eine bessere Verteilung der Heizgase auf den schraubenlinienförmigen Spalt 5, der sich ja dem Brenner gegenüber praktisch als eine Vielzahl von Einzelspalten repräsentiert.
Bei Anordnung eines solchen Einsatzes 25 in der Ausführungsform gemäß Fig.4 wird der Einsatz selbstverständlich nur innerhalb des inneren Wendelteiles 2' angeordnet.

Abschließend sei noch darauf hingewiesen, daß im Bedarfsfall nichts entgegensteht, die lediglich aufgeschobene Umfangswand 12 mit einfachen Mittel in ihrer Position zu den Platinenrändern festzulegen, zumal dafür die nicht wasserführenden, abgekröpften Ränder der Platinen 7,8 zur Verfügung stehen.

## Patentansprüche

1. Kompaktheizkessel, insbesondere zur Verwendung als Brennwertheizkessel, bestehend aus einer in einem das wärmeabgebende Medium führenden, mit Brenner bestückbaren Gehäuse (1) angeordneten, den Wärmeträger führenden Rohrwendel (2), deren die Wendelgänge (3) bildendes Rohr (4) einen Spalt (5) für das radial von innen aus der Rohrwendel (2) nach außen in das mit Abzugsstutzen (6) versehene Gehäuse (1) strömenden Heizgase begrenzt,
**dadurch gekennzeichnet,**
daß die Rohrwendel (2) hydraulisch zwischen zwei die Anschlußhydraulik für den Wärmeträger enthaltenden und die Seitenwände (1',1'') des Gehäuses (1) bildenden Platinen (7,8) eingebunden ist und daß der die Rohrwendel (2) umgebende Heizgasabströmraum (9) durch eine auf die Umfangsränder (10) der Platinen (7,8) abgedichtet aufgeschobene, den Abzugsstutzen (6) und einen Kondensatablaufstutzen (11) aufweisende Umfangswand (12) begrenzt ist.

2. Heizkessel nach Anspruch 1,
**dadurch gekennzeichnet,**
daß die Umfangsränder (10) der Platinen (7,8) kreisförmig ausgebildet sind.

3. Heizkessel nach Anspruch 1 oder 2,
**dadurch gekennzeichnet,**
daß die Umfangsränder (10) der Platinen (7,8) in Form gegeneinander gerichtet abgekröpfter Aufschubflächen (10') für die Umfangswand (12) ausgebildet sind.

4. Heizkessel nach einem der Ansprüche 1 bis 3,
**dadurch gekennzeichnet,**
daß die Umfangswand (12) an ihren Rändern mit je einer umlaufenden Dichtungsaufnahmesicke (13) versehen ist.

5. Heizkessel nach Anspruch 4,
**dadurch gekennzeichnet,**
daß die Sicken (13) in Form einer hinterschnittenen Nut (13') ausgebildet sind und die darin angeordneten, formangepaßten Dichtungen (26) mit einer in den Spalt zwischen Umfangswand (12) und Aufschubflächen (10') einschmiegbaren Lippe (26') versehen sind.

6. Heizkessel nach einem der Ansprüche 1 bis 5,
**dadurch gekennzeichnet,**
daß die Rohrwendel (2) aus zwei Wendelteilen (2',2'') gebildet ist, die jeweils in den mit Rücklaufanschlüssen (14) versehen Platinen (7,8) enden und innen in Platinenschalen (15,15'), die, zusammengefügt, einen umlaufenden, im wesentlichen mittigen Vorlaufhohlraum (16) mit Vorlaufanschluß (17) einschliesßen.

7. Heizkessel nach einem der Ansprüche 1 bis 5,
**dadurch gekennzeichnet,**
daß die Rohrwendel (2) aus zwei konzentrisch mit radialem Abstand zueinander angeordneten Wendelteilen (2',2'') gebildet ist, die zwischen den Platinen (7,8) hydraulisch eingebunden sind.

8. Heizkessel nach Anspruch 6,
**dadurch gekennzeichnet,**
daß die beiden Platinen (7,8), ausgehend ausgehend von ihren Rücklaufanschlüssen (14) einen sich bis zum Rohranschluß des jeweiligen Wendelteiles (2',2'') spiralförmig verlaufenden Flachkanal (18) aufweisen.

9. Heizkessel nach einem der Ansprüche 1 bis 8,
**dadurch gekennzeichnet,**
daß die Platinen (7,8), ausgehend von ihren in Bezug auf die Rohrwendel (2) überstehenden Rändern (7',8') gegeneinander durch Zuganker (19) verspannt sind.

10. Heizkessel nach Anspruch 6,
**dadurch gekennzeichnet,**
daß an den beiden Rücklaufanschlüssen (14) der Wendelteile (2',2'') sich zu einem mit Pumpe (20) bestückten Leitungsstrang (21) zusammenlaufende Rücklaufetränge (22) angeordnet sind.

11. Heizkessel nach Anspruch 7,
**dadurch gekennzeichnet,**
daß in jedem zu den Rücklaufanschlüssen (14) beider konzentrisch angeordneten Wendelteile (2',2'') führenden Rücklaufsträngen (22)eine drehzahlregelbare Pumpe (23) mit nachgeschaltetem Rückschlagventil (24) angeordnet ist.

12. Heizkessel nach einem der Ansprüche 1 bis 11,
**dadurch gekennzeichnet,**
daß an der brennerseitigen Gehäuseseitenwand (1') ein zylindrischer oder kegelstumpftörmiger, zur gegenüberliegenden Seitenwand (1'') schwach konvergierender Einsatz (25) angeordnet ist, dessen Durchmesser (D) kleiner bemessen ist als der Innendurchmesser (D') der Rohrwendel (2)

13. Heizkessel nach Anspruch 12,
**dadurch gekennzeichnet,**
daß der Einsatz (25) aus einem gelochten Blech oder aus Drahtgewebe gebildet ist.

14. Heizkessel nach einem der Ansprüche 1 bis 13,
**dadurch gekennzeichnet,**
daß in den Platinen (7,8) Einsatzöffnungen (27) für Sensoren zur Überwachung des zulässigen Heizwasservolumenstromes und der zulässigen Abgastemperatur angeordnet sind.

15. Heizkessel nach einem der Ansprüche 1 bis 14,
**dadurch gekennzeichnet,**
daß die die Rückwand der Brennkammer (BK) bildende Platine (8) in Form eines flachen Hohlkörpers mit als Strömungsleitstegen dienenden Versteifungsprägungen (8') ausgebildet ist.
